# EUROPÄISCHE PATENTSCHRIFT

(11) **EP 3 551 774 B1**
(45) Veröffentlichungstag und Bekanntmachung des Hinweises auf die Patenterteilung: **30.07.2025**
(21) Anmeldenummer: 18714128.8
(22) Anmeldetag: 16.02.2018
(51) Int. Cl.: C22C 21/14, C22C 21/16, F16B 25/00, C22F 1/057

(54) **ALUMINIUMLEGIERUNG, DRAHT SOWIE VERBINDUNGSELEMENT AUS DER ALUMINIUMLEGIERUNG**
ALUMINIUM ALLOY, WIRE, AND CONNECTION ELEMENT MADE FROM SAID ALUMINIUM ALLOY
ALLIAGE D'ALUMINIUM, FIL ET ÉLÉMENT DE CONNEXION FABRIQUÉ À PARTIR DE CET ALLIAGE D'ALUMINIUM

(30) Priorität: 17.02.2017 EP 17156731
(43) Veröffentlichungstag der Anmeldung: 16.10.2019
(73) Patentinhaber: Drahtwerk Elisental W. Erdmann GmbH & Co., 58809 Neuenrade (DE); Richard Bergner Verbindungstechnik GmbH & Co.KG, 91126 Schwabach (DE)
(72) Erfinder: BÜSRA, Culha, 90592 Schwarzenbruck (DE); HEUPEL, Janina, 58791 Werdohl (DE); JENNING, Ralf, 91575 Windsbach (DE); MAUERÖDER, Klaus, 91126 Schwabach (DE); NEUERER, Katharina, 91126 Schwabach (DE); WINGEN, Theodor, 58809 Neuenrade (DE)
(74) Vertreter: FDST Patentanwälte
(86) Internationale Anmeldenummer: PCT/EP2018/053904
(87) Internationale Veröffentlichungsnummer: WO 2018/149975

(56) Entgegenhaltungen:
- US-A- 3 984 260
- ISAO IWAYIMA ET AL: "AUTOMOTIVE 74 . 6056 Aluminum Alloy Wire for Automotive Fasteners", SEI TECHNICAL REVIEW, 1 October 2013 (2013-10-01), pages 74 - 78, XP055391532, Retrieved from the Internet <URL:http://global-sei.com/technology/tr/bn77/pdf/77-13.pdf> [retrieved on 20170717]
- SPIEKERMANN P: "LEGIERUNGEN - EIN BESONDERES PATENTRECHTLICHES PROBLEM? - LEGIERUNGSPRUEFUNG IM EUROPAEISCHEN PATENTAMT -", MITTEILUNGEN DER DEUTSCHEN PATENTANWAELTE, HEYMANN, KOLN, DE, 1 January 1993 (1993-01-01), pages 178 - 190, XP000961882, ISSN: 0026-6884

## Beschreibung

Die Erfindung betrifft eine Aluminiumlegierung zur Drahtherstellung für die Kaltumformung, insbesondere zur Herstellung von Verbindungselementen, nach dem Oberbegriff des Patentanspruchs 1. Die Erfindung betrifft weiterhin einen aus der Aluminiumlegierung hergestellten Draht sowie ein Verbindungselement aus der Aluminiumlegierung.

Im Automobilbereich hat die Gewichtsreduzierung von Bauteilen einen hohen Stellenwert, da das Gewicht eines Automobils unmittelbaren Einfluss auf Kraftstoffverbrauch und CO₂-Ausstoß hat. Ein Schwerpunkt liegt hier auf der Verwendung von Leichtmetallen, wie Aluminium und Magnesium. Als Verbindungselement für aus diesen Metallen hergestellte Bauteile, insbesondere zur Verbindung von Gehäusebauteilen kommen Aluminiumschrauben zum Einsatz. Der Vorteil der Verwendung gleichartiger Verbindungselemente liegt nicht allein in der Gewichtsersparnis in Vergleich zu Stahlschrauben; vielmehr ergeben sich besondere Vorteile durch das geringere Korrosionspotential sowie die epitaktische Ausdehnung von Verbindungselement und Bauteil im Betrieb. Aluminiumlegierungen und ihre chemische Zusammensetzung sind in der DIN EN 573-3 aufgeführt.

Als Kompromiss hinsichtlich Umformbarkeit, Festigkeit und Korrosionsstabilität wird für die Herstellung von Aluminiumschrauben eine Aluminiumlegierung gemäß EN AW-6056 (Al Si1MgCuMn) verwendet. Als nachteilig hat sich bei dieser Aluminiumlegierung jedoch erwiesen, dass diese nur eine beschränkte Temperaturbeständigkeit aufweist. Daher sind aus dieser Legierung gefertigte Verbindungselemente nur in Temperaturbereichen bis zu 150°C einsetzbar, bspw. zur Verschraubung der Ölwanne oder des Getriebegehäuses. Für Bereiche, in denen höhere Temperaturen auftreten, insbesondere im Motorbereich, wo Temperaturen von 180°C und höher vorherrschen, sind aus dieser Legierung hergestellte Verbindungselemente nicht geeignet. Zusätzlich weisen diese Legierungen mechanische Kenngrößen auf, die für zahlreiche Anwendungen im Automobilbereich nicht ausreichend sind. Daher kommen beispielsweise zur Verschraubung des Zylinderkopfes weiterhin Stahlschrauben zum Einsatz, obwohl der Motorblock regelmäßig aus Leichtmetall hergestellt ist.

Im Bereich der Luft- und Raumfahrt kommen Verbindungselemente zum Einsatz, die aus einer Aluminiumlegierung gemäß EN AW-2024 (Al Cu4Mg1) hergestellt sind. Hierbei handelt es sich um hochfeste Legierungen, die durch Ausscheiden der Al₂Cu-Phasen durch eine effektive Ausscheidungshärtung Zugfestigkeiten bis zu Rₘ = 570 MPa ermöglichen. Die Drahtherstellung aus dieser Legierung gestaltet sich jedoch sehr aufwendig.

Die Verwendung einer 6056 Al-Legierung für Befestigungselemente im Automobilsektor ist beispielsweise zu entnehmen aus Isao Iwayama et al., in Sei technical review, no 77, p. 74-78, "6056 Aluminium Alloy wire for automotive fasteners".

Ausgehend von dem zuvor beschriebenen Stand der Technik liegt der vorliegenden Erfindung die Aufgabe zugrunde, eine Aluminiumlegierung zur Verfügung zu stellen, die eine hohe Festigkeit und Korrosionsbeständigkeit aufweist, eine wirtschaftliche Drahtherstellung ermöglicht und die zur Herstellung von Verbindungselementen zum Einsatz in Temperaturbereichen von 180°C und höher geeignet ist.

Gemäß der Erfindung wird diese Aufgabe durch eine Aluminiumlegierung mit den Merkmalen des Anspruchs 1 gelöst. Neben Aluminium mit einem Anteil von größer 88% und Kupfer mit einem Anteil von größer gleich 5% sind Nickel und Silizium weitere Legierungselemente, mit einem Legierungsanteil von Nickel größer gleich 0,15 % und Silizium kleiner gleich 1,0 %.. Alle zuvor genannten sowie nachfolgenden Anteilsangaben sind in Massen-% angegeben. Der Aluminiumanteil ist dabei vorzugsweise größer 89% oder größer 90%. Er liegt beispielsweise im Bereich von 88% bis 90% oder ist größer als 90%.

Überraschend hat sich gezeigt, dass durch die Beigabe dieser Anteile an Nickel und Silizium eine hohe Festigkeit bei gleichzeitiger Verbesserung der Verarbeitbarkeit erzielt wird.

Der Legierungsanteil von Nickel liegt zwischen 0,15% und 1,0% und der Legierungsanteil von Silizium zwischen 0,4% und 1,0%. Der Legierungsanteil von Kupfer liegt zwischen 5,0% und 6,1%.

Gemäß der Erfindung ist Magnesium weiterer Legierungsbestandteil, mit einem Legierungsanteil zwischen 1,5 % und 2,2%. Hierdurch wird eine gute Grundfestigkeit der Legierung bewirkt, die bei Zugabe des Weiteren Legierungsbestandteils Nickel sehr gute Festigkeitseigenschaften der Legierung ermöglicht.

In weiterer Ausgestaltung der Erfindung sind Mangan und/oder Titan weitere Legierungsbestandteile. Dabei wirkt sich Mangan positiv auf die Wärmebeständigkeit der Legierung aus, während Titan kornfeinend wirkt, wodurch die Umformfähigkeit verbessert wird.

Gegenstand der vorliegenden Erfindung ist weiterhin ein Draht aus einer solchen Legierung nach dem Patentanspruch 5 sowie auch ein Verbindungselement, hergestellt aus einer solchen Legierung nach dem Patentanspruch 6.

Andere Weiterbildungen und Ausgestaltungen der Erfindung sind in den Unteransprüchen angegeben. Ein Ausführungsbeispiel wird nachfolgend im Einzelnen beschrieben:

Eine als ein bevorzugtes Ausführungsbeispiel gewählte Legierung umfasst die nachfolgende Zusammensetzung:

| Legierungselemente | Massen-% |
|---|---|
| Silizium (Si) | 0,65 |
| Eisen (Fe) | 0,09 |
| Kupfer (Cu) | 5,72 |
| Mangan (Mn) | 0,48 |
| Magnesium (Mg) | 1,82 |
| Chrom (Cr) | 0,11 |
| Nickel (Ni) | 0,8 |
| Zink (Zn) | 0,18 |
| Titan (Ti) | 0,15 |

Weiterhin können sonstige Beimengungen vorhanden sein, die insgesamt 0,15% nicht überschreiten und weiter vorzugsweise einzeln nicht 0,05% überschreiten. (Alternativ zu den angegebenen Mg- und Zn-Werten können diese auch geringfügig abweichen und z.B. 1,83% (Mg) und 0,19% (Zn) betragen.)

Ein Gießwalzdraht auf Basis einer Legierung gemäß diesem Ausführungsbeispiel ermöglicht einen wirtschaftlichen Drahtziehprozess, in dem der Draht auf den gewünschten Enddurchmesser gezogen wird. Dieser Draht ermöglicht wiederum eine wirtschaftliche Herstellung von Verbindungselementen, insbesondere von Schrauben. Die Herstellung erfolgt nach bekannten Verfahren. Speziell wird über ein oder mehrere (Kalt-) Umformvorgänge aus dem Draht ein Kopf mit Schaft ausgebildet, wobei der Schaft zumindest in einem Teilbereich mit einem Gewinde insbesondere durch Gewindewalzen versehen wird. Alternativ wird ein Gewindebolzen oder auch andere Verbindungs- oder Befestigungselementen wie Niete hergestellt.

Aufgrund der verbesserten Eigenschaften der Legierung weisen auf Basis dieses Drahtes hergestellte kaltumgeformte Verbindungselemente, insbesondere Schrauben eine hohe mechanische und korrosionstechnische Stabilität bei gleichzeitig hoher Warmfestigkeit auf. Aufgrund ihrer Temperaturbeständigkeit sind solche Verbindungselemente auch in Temperaturbereichen von 180°C und höher einsetzbar.

Speziell weisen aus dieser Aluminiumlegierung hergestellte Verbindungselemente, insbesondere Schrauben, eine Zugfestigkeit von vorzugsweise größer 570 MPa (bei Raumtemperatur) auf. Damit zeigt diese Legierung im Vergleich zu der üblichen Aluminiumlegierung gemäß EN AW-6056 eine deutlich verbesserte Zugfestigkeit.

In bevorzugter Weiterbildung zeichnet sich das aus dieser Legierung hergestellte Verbindungselement, insbesondere Schraube, durch eine besonders hohe Warmfestigkeit aus. So zeigt das Verbindungselement bei einer Temperaturbeanspruchung von 200 °C über 24 Stunden noch eine verbleibende Zugfestigkeit, die größer dem 0,8-fachen der Zugfestigkeit bei Raumtemperatur ist. Ergänzend oder alternativ beträgt die verbleibende Zugfestigkeit mehr als 400 MPa und insbesondere mehr als 450 MPa. Weiterhin ist zu erkennen, dass die Zugfestigkeit insgesamt lediglich einen in etwa linearen Abfall mit geringer Steigung aufweist. Die Zugfestigkeit verbleibt auf einem hohen Niveau von annähernd 500 MPa.

Damit eignet sich ein solches Verbindungselement besonders für den Einsatz in thermisch hoch beanspruchten Bereichen und ist zweckdienlicherweise in derartigen thermisch hoch beanspruchten Bereichen eingesetzt. Unter thermisch hoch beanspruchte Bereiche werden hierbei Bereiche verstanden, welche zumindest zeitweise eine Temperatur von größer 150°, vorzugsweise größer 180° und vorzugsweise größer 200° aufweisen. Diese Temperaturen werden dabei für Zeiträume beispielsweise größer 0,5 Stunden oder auch größer 1-3 Stunden erreicht und zwar wiederkehrend. Derartige thermisch wiederkehrende Belastungen treten beispielsweise bei Kraftfahrzeugmotoren auf.

Speziell ist das Verbindungselement innerhalb eines Kraftfahrzeugs eingesetzt und verbaut und dort insbesondere im Motorenbereich und speziell im Motor als solchen. Bei dem Motor handelt es sich insbesondere um einen Verbrennungsmotor. Die Schraube wird daher insbesondere als Motorschraube, beispielsweise als Zylinderkopfschraube eingesetzt.

Alternativ wird das Verbindungselement vorzugsweise als ein elektrisches Kontaktelement eingesetzt, speziell im Bereich eines Batterieanschlusses einer Kraftfahrzeug-Batterie. Bei dem Verbindungselement handelt es sich beispielsweise um eine Polklemme oder um eine Schraube für eine solche Polklemme. Speziell bei Elektrofahrzeugen mit einem elektrischen Fahrmotor sind im Fahrzeug Akkumulatoren mit hoher Kapazität verbaut, die für kurze Ladezeiten mit sehr hohen Ladeströmen beaufschlagt werden. Auch sind diese Akkumulatoren für eine hohe Leistungsabgabe an die elektrischen Fahrmotoren ausgebildet, die häufig eine elektrische Leistung von größer 100 KW aufweisen. Durch die entsprechend hohen Ströme sind die elektrischen Leitungen und speziell auch die Batteriepole thermisch hoch beansprucht.

Sofern vorliegend ausgeführt ist, dass der Draht oder das Verbindungselement aus der Aluminiumlegierung hergestellt ist, so werden hierunter ein Draht oder ein Verbindungselement verstanden, welches vollständig aus der Legierung besteht, und gegebenenfalls auch mit einer Beschichtung z.B. eine Gleitbeschichtung versehen ist. Daneben werden hierunter aber auch Elemente verstanden, bei denen der Draht oder das Verbindungselement aus zwei unterschiedlichen Materialien mit einem Kern aus einem ersten Material und einem Mantel aus einem zweiten Material bestehen. Entweder der Kern (bevorzugt) oder der Mantel besteht aus der erfindungsgemäßen Aluminiumlegierung. Eine derartige Schraube ist aus der DE 10 2014 220 337 A1 zu entnehmen. Bei dieser ist ein Aluminium-Kern von einem Titan Mantel umgeben. Aus der DE 10 2014 220 338 A1 ist ein spezielles Herstellungsverfahren für eine derartige Schraube zu entnehmen.

Es gibt eine Vielzahl von Möglichkeiten, die erfindungsgemäße Aluminiumlegierung auszugestalten und weiterzubilden. Die Spannbreite der erfindungsgemäßen Legierungszusammensetzungen ist in der nachstehenden Tabelle 1 angegeben:

| Legierungselemente | Wert-von (in Massen-%) | Wert-bis (in Massen-%) |
|---|---|---|
| Silizium (Si) | 0,4 | 1,0 |
| Eisen (Fe) | 0 | 0,2 |
| Kupfer (Cu) | 5,0 | 6,1 |
| Mangan (Mn) | 0 | 0,5 |
| Magnesium (Mg) | 1,5 | 2,2 |
| Chrom (Cr) | 0 | 0,2 |
| Nickel (Ni) | 0,15 | 1,0 |
| Zink (Zn) | 0 | 0,3 |
| Titan (Ti) | 0 | 0,25 |

Sonstige Beimengungen dürfen insgesamt 0,15% und vorzugsweise einzeln 0,05% nicht überschreiten. Der Restanteil ist Aluminium. Dessen Anteil liegt bei größer 88% und vorzugsweise bei größer 90%. Der Anteil an Aluminium liegt weiterhin vorzugsweise bei kleiner 93%.

Ausführungsbeispiele der Erfindung werden nachfolgend anhand der Figuren näher erläutert. Die Figuren zeigen
- Fig.1: ein vereinfachtes Vergleichsdiagramm für die Warmfestigkeit verschiedener Aluminiumlegierungen sowie
- Fig. 2: eine Schraube in Seitenansicht.

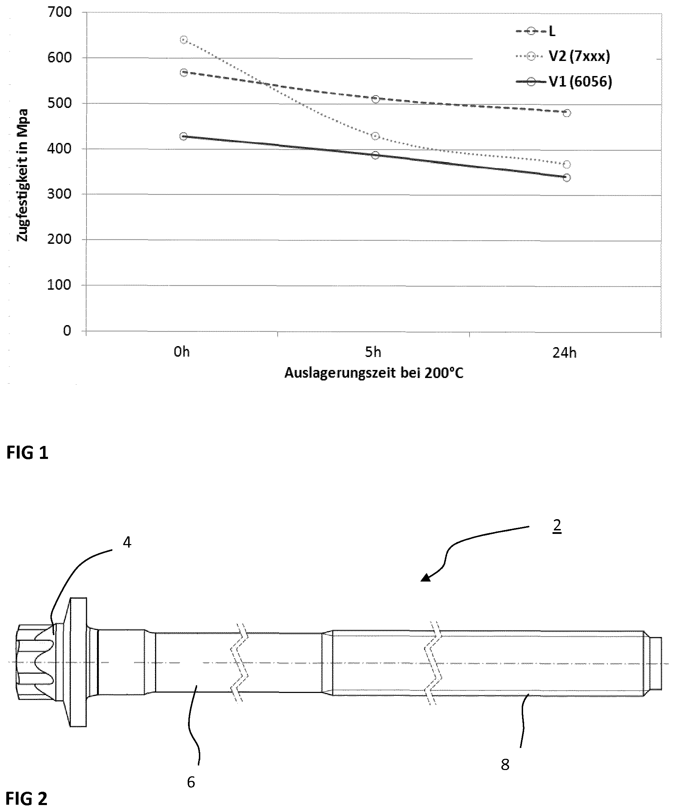

In der Fig. 1 ist die Zugfestigkeit (angegeben in MPa) gegenüber der Zeit (Auslagerungszeit) für Elemente (Schrauben) aus verschiedenen Legierungen angegeben. Die Elemente wurden hierbei auf 200 °C erwärmt und bei dieser Temperatur für insgesamt 24 Stunden gehalten.

Bei den verschiedenen Legierungen handelt es sich um zwei Vergleichslegierungen V1, V2 und um die erfindungsgemäße Legierung L (gestrichelte Linie). Bei der Vergleichslegierung V1 handelt es sich um die Legierung gemäß EN AW-6056 (durchgezogene Linie) und bei der Vergleichslegierung V2 um eine sogenannte 7xxx-Legierung (gepunktete Linie).

Anhand des Diagramms ist gut zu erkennen dass die erfindungsgemäße Legierung L im Vergleich zur Vergleichsregierung V1 durchgehend eine deutlich höhere Zugfestigkeit aufweist. Diese liegt über die gesamte Auslagerungszeit mehr als 100 MPa über der Zugfestigkeit der Vergleichslegierung V1.

Im Vergleich zur Vergleichslegierung V2 weist die erfindungsgemäße Legierung L zwar eine geringere Zugfestigkeit zu Beginn der Auslagerungszeit auf, zeichnet sich jedoch durch eine deutlich bessere Warmfestigkeit aus, sodass die Zugfestigkeit auch bei längeren Auslagerungszeiten hoch bleibt und bereits nach wenigen Stunden eine höhere Zugfestigkeit als die Vergleichslegierung V2 aufweist.

Aufgrund dieser Eigenschaften eignet sich die erfindungsgemäße Legierung L speziell für Anwendungen in thermisch hoch beanspruchten Bereichen und wird dort auch eingesetzt. Speziell wird die Legierung für die Herstellung von Verbindungselementen wie Schrauben herangezogen.

Fig. 2 zeigt beispielhaft eine solche Schraube 2 in einer Seitenansicht. Die Schraube 2 erstreckt sich entlang einer Mittenlängsachse ausgehend von einem Kopf 4, an den sich ein Schaft 6 anschließt. Ein Teilbereich des Schafts 6 ist mit einem Gewinde 8 versehen. Bei der dargestellten Schraube 2 handelt es sich um eine Motorschraube, speziell um eine Zylinderkopfschraube. Diese weisen typischerweise eine Länge von mehreren Zentimetern bis zu zehn oder 15 cm auf und sind beispielsweise als M8, M10, M11, oder M12 Schrauben ausgebildet.

## Patentansprüche

1. Aluminiumlegierung zur Drahtherstellung für die Kaltumformung, insbesondere zur Herstellung von Verbindungselementen, mit einem Legierungsanteil von Aluminium größer 88% sowie Kupfer größer gleich 5% als Hauptlegierungselemente, **dadurch gekennzeichnet, dass** die Aluminiumlegierung besteht aus:
- 5,0 bis 6,1% Kupfer
- 0,15 bis 1,0% Nickel,
- 0,4 bis 1,0% Silizium
- 0 bis 0,2% Eisen
- 0 bis 0,2% Mangan,
- 1,5 bis 2,2% Magnesium,
- 0 bis 0,2% Chrom
- 0 bis 0,3% Zink
- 0 bis 0,25% Titan,
- 0 bis 0,15% Beimengungen und
- Rest Aluminium.

2. Aluminiumlegierung nach Anspruch 1, **dadurch gekennzeichnet, dass** der Legierungsanteil von Aluminium zwischen 88% und 90% oder größer 90% ist.

3. Aluminiumlegierung nach einem der vorgenannten Ansprüche, **dadurch gekennzeichnet, dass** Mangan ein weiteres Legierungsbestandteil ist.

4. Aluminiumlegierung nach einem der vorgenannten Ansprüche, **dadurch gekennzeichnet, dass** Titan ein weiteres Legierungsbestandteil ist.

5. Draht zur Herstellung von Verbindungselementen, insbesondere von Schrauben, **dadurch gekennzeichnet, dass** dieser aus einer Aluminiumlegierung nach einem der vorgenannten Ansprüche hergestellt ist.

6. Verbindungselement, insbesondere Schraube, **dadurch gekennzeichnet, dass** dieses aus einer Aluminiumlegierung nach einem der vorgenannten Ansprüche hergestellt ist.

7. Verbindungselement nach dem vorhergehenden Anspruch, welches eine Zugfestigkeit von größer 570MPa bei Raumtemperatur aufweist.

8. Verbindungselement nach einem der beiden vorhergehenden Ansprüche mit einer hohen Warmfestigkeit, wobei das Verbindungselement nach einer Temperaturbeanspruchung von 200°C über 24h eine verbleibende Zugfestigkeit von größer dem 0,8-fachen der Zugfestigkeit bei Raumtemperatur aufweist und / oder eine verbleibende Zugfestigkeit von größer 400MPa, insbesondere von größer 450MPa aufweist.

9. Verbindungselement nach einem der Ansprüche 6 bis 8, welche in einem thermisch beanspruchten Bereich, insbesondere in einem Kraftfahrzeug eingesetzt ist, bei dem die Temperatur zumindest zeitweise oberhalb von 180°C liegen.

10. Verbindungselement nach einem der Ansprüche 6 bis 9, welches als Motorschraube eines Verbrennungsmotors eingesetzt ist.

11. Verbindungselement nach einem der Ansprüche 6 bis 10, welches als Kontaktelement, insbesondere als Polklemme oder Schraube für eine Polklemme eines Akkumulators eingesetzt ist.

## Claims

1. Aluminium alloy for wire production for cold forming, in particular for the production of connecting elements, having an alloy content of aluminium greater than 88% and copper greater than or equal to 5% as main alloy elements, **characterized in that** the aluminium alloy consists of:
- 5.0% to 6.1% copper
- 0.15% to 1.0% nickel,
- 0.4% to 1.0% silicon,
- 0% to 0.2% iron,
- 0% to 0.2% manganese,
- 1.5% to 2.2% magnesium,
- 0% to 0.2% chromium,
- 0% to 0.3% zinc,
- 0% to 0.25% titanium,
- 0% to 0.15% addition and
- aluminium as the balance.

2. Aluminium alloy according to Claim 1, **characterized in that** the alloy content of aluminium is between 88% and 90% or greater than 90%.

3. Aluminium alloy according to either of the preceding claims, **characterized in that** manganese is a further alloy constituent.

4. Aluminium alloy according to any of the preceding claims, **characterized in that** titanium is a further alloy constituent.

5. Wire for production of connecting elements, in particular screws, **characterized in that** it is made of an aluminium alloy according to any of the preceding claims.

6. Connecting element, in particular screw, **characterized in that** it is made of an aluminium alloy according to any of the preceding claims.

7. Connecting element according to the preceding claim, having a tensile strength of greater than 570 MPa at room temperature.

8. Connecting element according to one of the two preceding claims having high hot strength, wherein the connecting element after thermal stress at 200°C over 24 h has residual tensile strength of greater than 0.8 times the tensile strength at room temperature and/or residual tensile strength of greater than 400 MPa, in particular greater than 450 MPa.

9. Connecting element according to any of Claims 6 to 8, used in a region subject to thermal stress, in particular in a motor vehicle, in which the temperature is at least intermittently above 180°C.

10. Connecting element according to any of Claims 6 to 9, used as an engine screw in an internal combustion engine.

11. Connecting element according to any of Claims 6 to 10, used as a contact element, in particular as pole clamp or screw for a pole clamp of an accumulator.

## Revendications

1. Alliage d'aluminium destiné à la fabrication de fil métallique pour le formage à froid, en particulier à la fabrication d'éléments d'assemblage, présentant une teneur de l'alliage en aluminium supérieure à 88 % ainsi qu'en cuivre supérieure ou égale à 5 % en tant qu'éléments d'alliage principaux, **caractérisé en ce que** l'alliage d'aluminium est constitué de :
- 5,0 à 6,1 % de cuivre
- 0,15 à 1,0 % de nickel,
- 0,4 bis 1,0 % de silicium
- 0 à 0,2 % de fer
- 0 à 0,2 % de manganèse,
- 1,5 à 2,2 % de magnésium,
- 0 à 0,2 % de chrome
- 0 à 0,3 % de zinc
- 0 à 0,25 % de titane,
- 0 à 0,15 % d'impuretés et
- le reste consistant en aluminium.

2. Alliage d'aluminium selon la revendication 1, **caractérisé en ce que** la teneur de l'alliage en aluminium est comprise entre 88 % et 90 % ou supérieure à 90 %.

3. Alliage d'aluminium selon l'une quelconque des revendications précédentes, **caractérisé en ce que** le manganèse est un autre composant de l'alliage.

4. Alliage d'aluminium selon l'une quelconque des revendications précédentes, **caractérisé en ce que** le titane est un autre composant de l'alliage.

5. Fil métallique destiné à la fabrication d'éléments d'assemblage, en particulier de vis, **caractérisé en ce qu'**il est fabriqué à partir d'un alliage d'aluminium selon l'une quelconque des revendications précédentes.

6. Élément d'assemblage, en particulier vis, **caractérisé en ce qu'**il est fabriqué à partir d'un alliage d'aluminium selon l'une quelconque des revendications précédentes.

7. Élément d'assemblage selon la revendication précédente, qui présente une résistance à la traction supérieure à 570 MPa à la température ambiante.

8. Élément d'assemblage selon l'une quelconque des deux revendications précédentes, ayant une résistance mécanique à chaud élevée, l'élément d'assemblage présentant, après une sollicitation thermique de 200 °C pendant 24 h, une résistance à la traction résiduelle de plus de 0,8 fois la résistance à la traction à la température ambiante et/ou une résistance à la traction résiduelle supérieure à 400 MPa, en particulier supérieure à 450 MPa.

9. Élément d'assemblage selon l'une quelconque des revendications 6 à 8, qui est utilisé dans une zone soumise à des contraintes thermiques, en particulier dans un véhicule automobile, dans laquelle la température est au moins temporairement supérieure à 180 °C.

10. Élément d'assemblage fixation selon l'une quelconque des revendications 6 à 9, qui est utilisé en tant que vis de moteur d'un moteur à combustion interne.

11. Élément d'assemblage selon l'une quelconque des revendications 6 à 10, qui est utilisé en tant qu'élément de contact, en particulier en tant que borne polaire ou vis pour une borne polaire d'un accumulateur.
